# EUROPEAN PATENT APPLICATION

(11) **EP 4 495 741 A1**
(43) Date of publication of application: **22.01.2025**
(21) Application number: 23770378.0
(22) Date of filing: 28.02.2023
(51) Int. Cl.: G06F 3/01, G06F 3/0346, G06T 19/00

(54) **INFORMATION PROCESSING DEVICE AND INFORMATION PROCESSING METHOD**

(30) Priority: 18.03.2022 JP 2022043596
(71) Applicant: Sony Group Corporation, Tokyo 108-0075 (JP)
(72) Inventor: YUASA Hiroshi, Tokyo 108-0075 (JP); ISHIKAWA Tsuyoshi, Tokyo 108-0075 (JP); NAGANO Keijiroh, Tokyo 108-0075 (JP); SHIROMA Shin, Tokyo 108-0075 (JP)
(74) Representative: D Young & Co LLP
(86) International application number: PCT/JP2023/007211
(87) International publication number: WO 2023/176420

(57) **Abstract**

The present technology is an information processing apparatus and information processing method that enable quick and accurate detection of a gesture of pinching a virtual object.

The information processing apparatus includes a gesture detection unit that individually detects movement of a hand base portion that is a portion not including fingers of a hand of a user, and movement of a first finger of the hand, and detects a gesture in which the user pinches a virtual object, on the basis of the movement of the hand base portion and the movement of the first finger. The present technology can be applied to, for example, a head-mounted display.

## Description

### TECHNICAL FIELD

The present technology relates to an information processing apparatus and an information processing method, and more particularly, to an information processing apparatus and information processing method suitable for use in a case of detecting a gesture of pinching a virtual object.

### BACKGROUND ART

In augmented reality (AR) or mixed reality (MR) or the like, which is technology of using a real world and a virtual world, for example, a user may perform a gesture of pinching a virtual object.

Here, the virtual object is visual information superimposed and displayed on the real world in a field of view of the user.

In this regard, conventionally, there has been proposed a technique in which a virtual object is determined to have been pinched in a case where a state where the virtual object is positioned between two fingers is maintained for a predetermined period or longer (refer to Patent Document 1, for example).

### CITATION LIST

### PATENT DOCUMENT

Patent Document 1: Japanese Patent Application Laid-Open No. 2016-189194

### SUMMARY OF THE INVENTION

### PROBLEMS TO BE SOLVED BY THE INVENTION

However, in the invention described in Patent Document 1, there is a time lag of a predetermined period or longer between when the user tries to pinch the virtual object and when the virtual object is determined to have been pinched.

The present technology has been made in view of such a situation, and enables quick and accurate detection of a gesture of pinching a virtual object.

### SOLUTIONS TO PROBLEMS

An information processing apparatus according to one aspect of the present technology includes a gesture detection unit that individually detects movement of a hand base portion that is a portion not including fingers of a hand of a user, and movement of a first finger of the hand, and detects a gesture in which the user pinches a virtual object, on the basis of the movement of the hand base portion and the movement of the first finger.

An information processing method according to one aspect of the present technology includes individually detecting movement of a hand base portion that is a portion not including fingers of a hand of a user, and predetermined movement of a finger of the hand, and, on the basis of the movement of the hand base portion and the movement of the finger, detecting a gesture in which the user pinches a virtual object.

In one aspect of the present technology, movement of a hand base portion that is a portion not including fingers of a hand of a user, and movement of a first finger of the hand are individually detected, and a gesture in which the user pinches a virtual object is detected on the basis of the movement of the hand base portion and the movement of the first finger.

### BRIEF DESCRIPTION OF DRAWINGS

Fig. 1 is a diagram for describing a pinching gesture with respect to a virtual object.
Fig. 2 is a diagram for describing a problem in a case of detecting a gesture of pinching the virtual object.
Fig. 3 is a diagram for describing a problem in a case of detecting a gesture of pinching the virtual object.
Fig. 4 is a diagram for describing a problem in a case of detecting a gesture of releasing the virtual object.
Fig. 5 is a diagram illustrating an embodiment of an information processing system to which the present technology is applied.
Fig. 6 is a diagram illustrating a configuration example of a fingertip sensor.
Fig. 7 is a block diagram illustrating a configuration example of a head-mounted display.
Fig. 8 is a flowchart for describing a pinching gesture detection processing by the information processing system.
Fig. 9 is a diagram for describing a method for detecting a gesture of pinching the virtual object.
Fig. 10 is a diagram for describing a method for detecting a gesture of gently releasing a virtual object.
Fig. 11 is a diagram for describing a method for detecting a gesture of swiftly releasing a virtual object.
Fig. 12 is a block diagram illustrating a configuration example of a computer.

### MODE FOR CARRYING OUT THE INVENTION

Hereinafter, modes for carrying out the present technology will be described. Description will be given in the following order.
1. Background of present technology
2. Embodiment
3. Modifications
4. Others

### <<1. Background of present technology>>

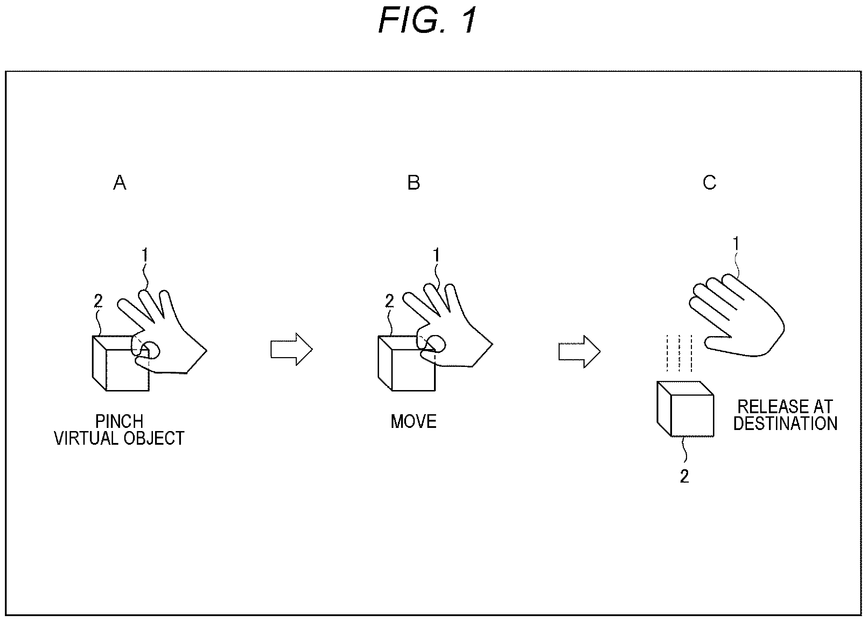

First, background of the present technology will be described with reference to Figs. 1 to 4.

In AR or MR, a gesture of pinching a virtual object 2 may be performed as illustrated in Fig. 1. Specifically, for example, as illustrated in A of Fig. 1, a user pinches the virtual object 2 by bringing a fingertip (ball) of a thumb and a fingertip (ball) of an index finger of a hand 1 into contact with each other. Next, as illustrated in B of Fig. 1, the user moves the hand 1 while keeping the fingertip of the thumb and the fingertip of the index finger in contact with each other, thereby moving the virtual object 2 to a destination. Then, as illustrated in C of Fig. 1, at the destination, the user separates the fingertip of the thumb and the fingertip of the index finger from each other, thereby releasing the virtual object 2.

Note that, hereinafter, bringing a fingertip of a thumb and a fingertip of an index finger into contact with each other is simply referred to as bringing the thumb and the index finger into contact with each other. Furthermore, separating the fingertip of the thumb and the fingertip of the index finger from each other is simply referred to as separating the thumb and the index finger from each other.

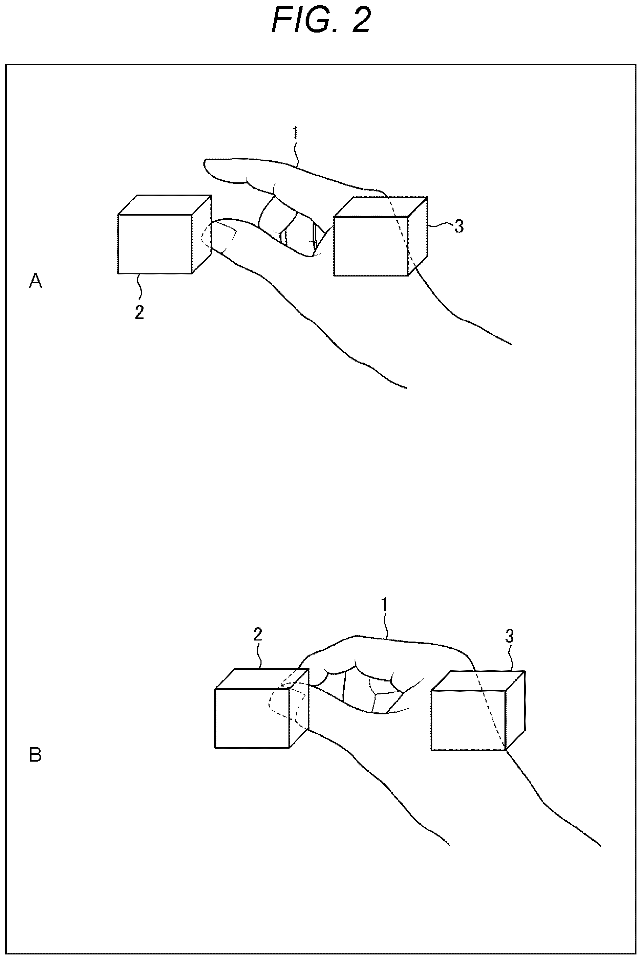

Here, for example, as illustrated in A of Fig. 2, in a case where the user selects and pinches the virtual object 2 from among the virtual object 2 and a virtual object 3 that are close to each other, the user brings fingertips of the thumb and index finger of the hand 1 close to the virtual object 2 in a state where the thumb and the index finger are separated from each other. Then, as illustrated in B of Fig. 2, the user brings the thumb and index finger of the hand 1 into contact with each other so that the thumb and index finger overlap the virtual object 2 as viewed from the user. Therefore, the user can select and pinch the virtual object 2 from among the virtual object 2 and the virtual object 3.

Here, positions of fingertips of the hand 1 move in both cases where the hand 1 is moved to select the virtual object and where the thumb and the index finger are brought into contact with each other to pinch the virtual object. It is difficult to distinguish whether movement of the fingertips indicates that the user intends to select the virtual object or pinch the virtual object.

Furthermore, for example, in a case where an optical sensor such as a camera is used, it is sometimes difficult to detect a contact between the thumb and the index finger depending on a position or posture of the hand 1.

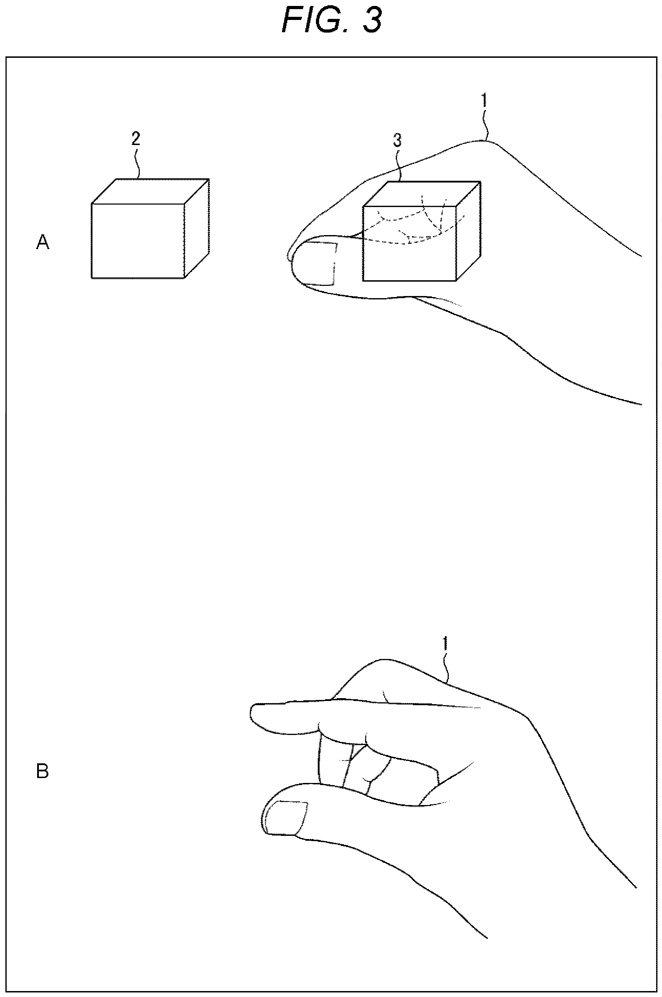

For example, in A of Fig. 3, although the thumb and index finger of the hand 1 are actually separated from each other, depending on an angle, as illustrated, it seems that the thumb and the index finger are in contact with each other. Therefore, there is a possibility that the virtual object 3 is erroneously detected as being pinched.

In this regard, for example, as illustrated in B of Fig. 3, it is conceivable that the position and posture of the hand 1 are adjusted so that the fingertip of the thumb and the fingertip of the index finger are easily visually recognized, and then the thumb and the index finger are brought into contact with each other. However, in this case, it takes time to adjust the position and posture of the hand 1, and movement of the hand 1 becomes unnatural, leading to poor operability.

Moreover, for example, as in the invention described in Patent Document 1 described above, in a case where a virtual object is determined to have been pinched in a case where a state where the thumb and the index finger are in contact with each other is maintained for a predetermined period or longer, there occurs a time lag of a predetermined period or longer by the time when the virtual object is determined to have been pinched.

Furthermore, in a case where the user moves an own hand while pinching the virtual object and releases the virtual object at a desired position, positions of fingertips of a hand of the user move. It is difficult to distinguish whether the movement of the fingertips indicates that the user is moving the virtual object or intends to release the virtual object.

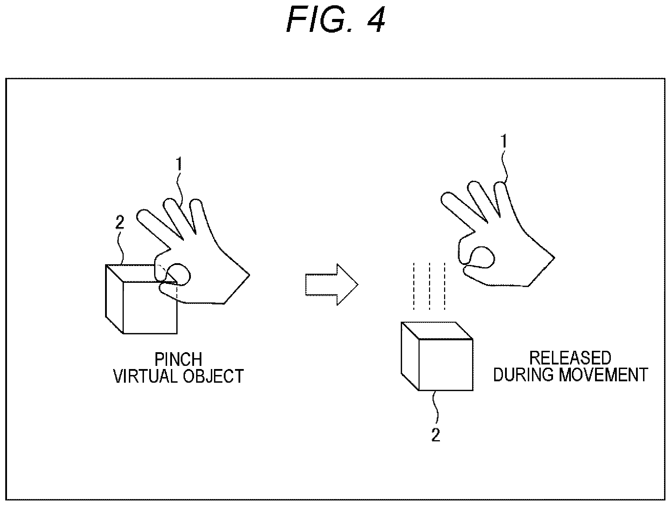

Moreover, for example, in a case where the user moves the hand quickly or to a large extent by, for example, quickly moving or swinging the virtual object while pinching the virtual object, it is conceivable that the thumb and the index finger are unintentionally separated In the middle of the action. In this case, for example, as illustrated in Fig. 4, there is a possibility that the virtual object 2 is unintentionally released in the course of pinching the virtual object 2 with the hand 1 and moving the virtual object 2 to the desired position.

In this regard, the present technology enables accurate and quick detection of a gesture of pinching the virtual object and a gesture of releasing the virtual object.

Note that, hereinafter, a series of gestures from when a user pinches the virtual object to when the user releases the virtual object is referred to as a pinching gesture.

### <<2. Embodiment»

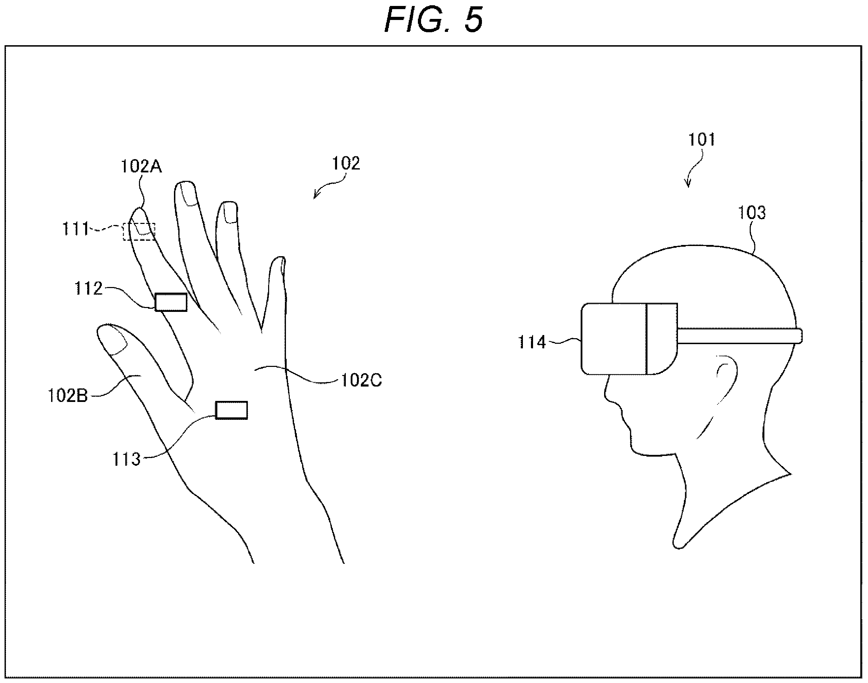

Next, an embodiment of the present technology is described with reference to Figs. 5 to 11.

### <Configuration example of information processing system 101>

Fig. 5 illustrates an embodiment of an information processing system 101 to which the present technology is applied.

The information processing system 101 includes a fingertip sensor 111, an IMU 112, an IMU 113, and a head-mounted display (HMD) 114.

The fingertip sensor 111, the IMU 112, and the IMU 113 are attached to a hand 102 used in a case where a user pinches a virtual object.

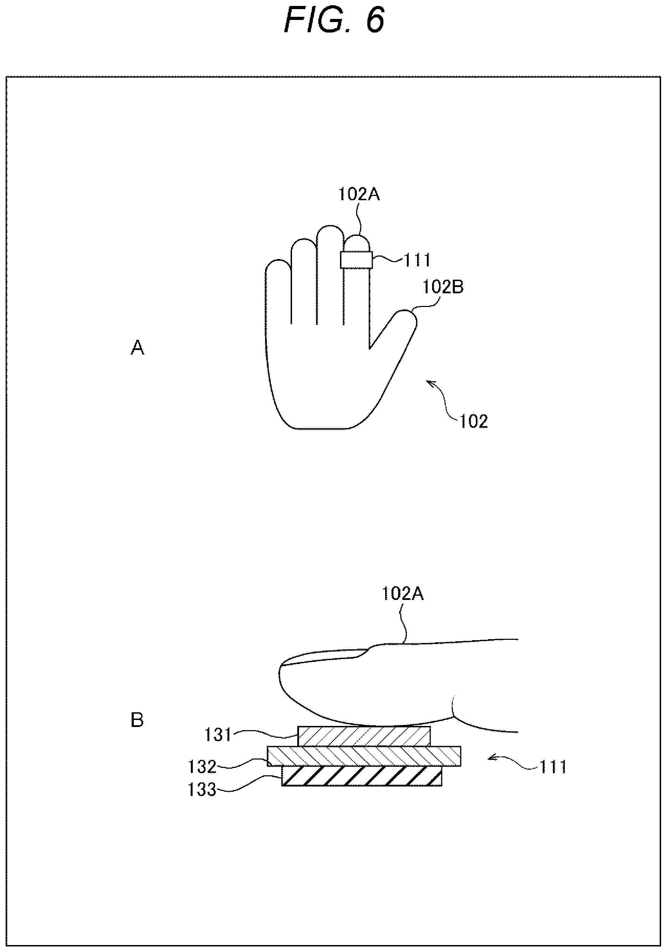

Specifically, as illustrated in A of Fig. 6, the fingertip sensor 111 is attached to a fingertip of an index finger 102A.

As illustrated in B of Fig. 6, the fingertip sensor 111 includes a pressure sensor 131, a finger band 132, and a capacitance sensor 133.

The pressure sensor 131 is disposed so as to be in contact with a ball of the index finger 102A. The pressure sensor 131 detects pressure applied to the fingertip (ball) of the index finger 102A.

The finger band 132 is used to attach the fingertip sensor 111 to the fingertip of the index finger 102A.

The capacitance sensor 133 is provided outside the finger band 132. The capacitance sensor 133 is disposed at substantially the same position as the pressure sensor 131 with the finger band 132 interposed therebetween. The capacitance sensor 133 detects a contact state of a body that is in contact with the fingertip of the index finger 102A by detecting capacitance on the fingertip (ball) of the index finger 102A.

The fingertip sensor 111 transmits, to the HMD 114, sensor data indicating a result of detecting the pressure and capacitance on the fingertip of the index finger 102A.

The IMU 112 is attached to, for example, a metacarpophalangeal portion corresponding to a metacarpophalangeal bone between the second joint and the third joint of the index finger 102A, and detects acceleration and angular velocity of the index finger 102A. The IMU 112 transmits, to the HMD 114, sensor data indicating results of detecting the acceleration and angular velocity of the index finger 102A.

The IMU 113 is attached to a back of hand 102C.
The IMU 113 detects acceleration and angular velocity of a portion of the hand 102 excluding fingers (hereinafter, referred to as a hand base portion). The hand base portion includes the back of hand 102C and a palm. The IMU 113 transmits, to the HMD 114, sensor data indicating the results of detecting the acceleration and angular velocity of the hand base portion of the hand 102.

Note that the IMU 113 may be attached to a position other than the back of hand 102C (for example, a palm or the like of the hand 102) as long as the acceleration and angular velocity of the hand base portion of the hand 102 can be detected at the position.

Note that no sensor is particularly attached to a thumb 102B.

The HMD 114 is worn on a head 103 of the user and implements AR or MR. For example, the HMD 114 superimposes and displays a virtual object on a real world in a field of view of the user.

Note that a type of the virtual object is not particularly limited. For example, the virtual object includes an object imitating a body in the real world, an object that visually transmits various types of information, an object for operating the HMD 114, and the like.

Furthermore, the HMD 114 detects a pinching gesture by the user on the basis of sensor data from the fingertip sensor 111, the IMU 112, and the IMU 113.

### <Configuration example of HMD 114>

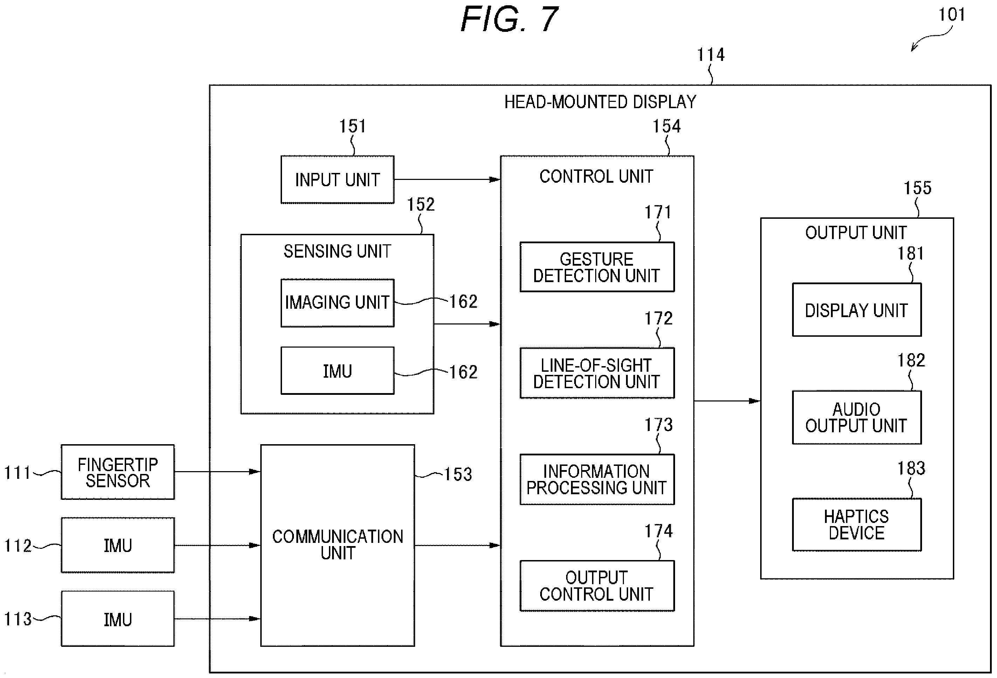

Fig. 7 illustrates a configuration example of the HMD 114.

The HMD 114 includes an input unit 151, a sensing unit 152, a communication unit 153, a control unit 154, and an output unit 155.

The input unit 151 includes various types of input device and operation device, and supplies the control unit 154 with input data that is input by using each device. The input data includes, for example, operation data from the operation device, audio data from a microphone, and the like.

The sensing unit 152 includes an imaging unit 161 and an IMU 162.

The imaging unit 161 includes, for example, a camera that captures an image in front of a face of the user (a direction in which the face faces) (hereinafter, referred to as a front camera), and a camera that captures an image of an area including eyes of the user (hereinafter, referred to as a user camera). The front camera supplies the control unit 154 with an image obtained by image capturing (hereinafter, referred to as a front image). The user camera supplies the control unit 154 with an image obtained by image capturing (hereinafter, referred to as a user image).

Note that, as the front camera, for example, it is desirable to use a camera capable of detecting a depth (distance), such as a time of flight (ToF) camera, so that bone information of fingers of the user can be detected.

The IMU 162 detects acceleration and angular velocity of the head of the user wearing the HMD 114. The IMU 162 supplies the control unit 154 with sensor data indicating results of detecting the acceleration and angular velocity of the head of the user.

The communication unit 153 communicates with the fingertip sensor 111, the IMU 112, and the IMU 113, and receives sensor data from each of them. The communication unit 153 supplies the received sensor data to the control unit 154.

Note that a method for communication by the communication unit 153 is not particularly limited, and may be either wired communication or wireless communication.

The control unit 154 executes control of each unit of the HMD 114 and various types of processing. The control unit 154 includes a gesture detection unit 171, a line-of-sight detection unit 172, an information processing unit 173, and an output control unit 174.

The gesture detection unit 171 detects various types of gestures by the user, on the basis of the sensor data from the fingertip sensor 111, the IMU 112, and the IMU 113, and the front image from the front camera. A gesture to be detected includes the above-described pinching gesture.

The line-of-sight detection unit 172 detects a direction of a line of sight of the user on the basis of the user image from the user camera and the sensor data from the IMU 162.

The information processing unit 173 performs various types of information processing on the basis of the sensor data from the fingertip sensor 111, the IMU 112, and the IMU 113, the input data from the input unit 151, the front image and user image from the imaging unit 161, the sensor data from the IMU 162, the gesture of the user detected by the gesture detection unit 171, the line of sight of the user detected by the line-of-sight detection unit 172, and the like. The various types of information processing include, for example, processing of generating image data for displaying the virtual object.

The output control unit 174 controls output of various types of information by the output unit 155, on the basis of, for example, a result of processing by the information processing unit 173. For example, the output control unit 174 controls output of visual information by a display unit 181. This visual information includes the virtual object. The output control unit 174 controls output of auditory information by an audio output unit 182. The output control unit 174 controls output of tactile information by a haptics device 183.

The output unit 155 includes the display unit 181, the audio output unit 182, and the haptics device 183.

The display unit 181 includes one or more displays, and displays the visual information under control of the output control unit 174. For example, within the field of view of the user, the display unit 181 superimposes and displays a virtual object, which is a type of visual information, on the real world.

The audio output unit 182 includes one or more audio output devices, and outputs the auditory information under control of the output control unit 174. As the audio output devices, for example, a speaker, headphones, earphones, and the like are conceivable.

The haptics device 183 outputs the tactile information under control of the output control unit 174. For example, the haptics device 183 vibrates a housing of the HMD 114. For example, the haptics device 183 is worn on a predetermined portion (a hand, for example) of a body of the user, and transmits tactile information, such as vibration, to the worn portion.

### <Pinching gesture detection processing>

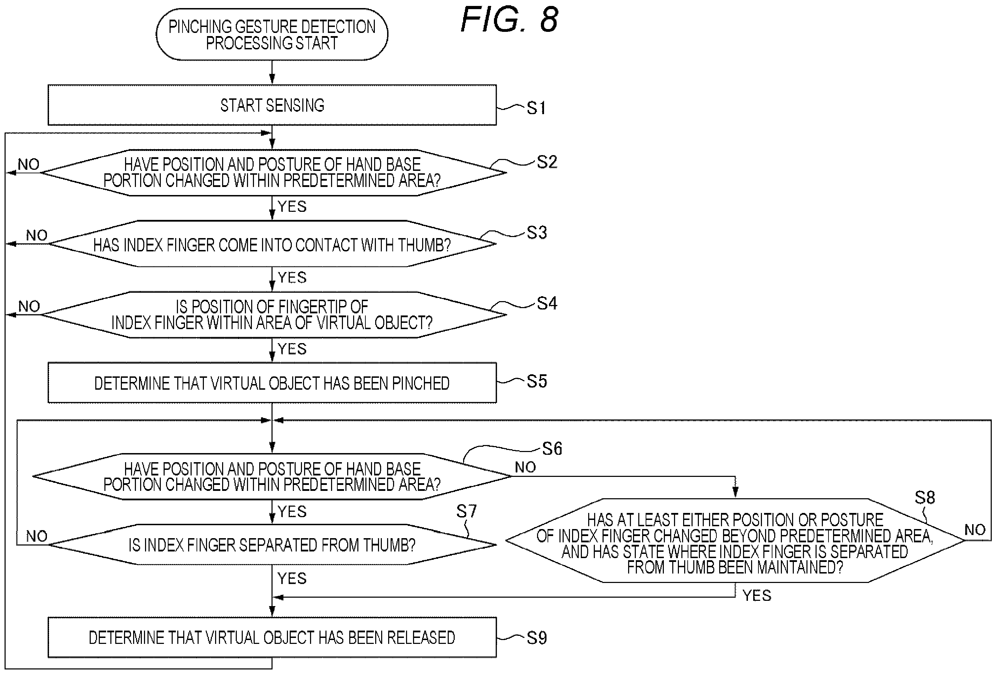

Next, pinching gesture detection processing executed by the information processing system 101 will be described with reference to the flowchart in Fig. 8.

This processing is started when power of the HMD 114 is turned on, and is ended when the power is turned off, for example.

In Step S1, the information processing system 101 starts sensing. Specifically, the fingertip sensor 111 starts processing of detecting capacitance and pressure on the fingertip of the index finger of the user and transmitting sensor data indicating a detection result to the HMD 114. The IMU 112 starts processing of detecting acceleration and angular velocity of the index finger of the user and transmitting sensor data indicating a detection result to the HMD 114. The IMU 113 starts processing of detecting acceleration and angular velocity of the hand base portion of the user and transmitting sensor data indicating a detection result to the HMD 114.

Meanwhile, the communication unit 153 of the HMD 114 starts processing of receiving the sensor data from the fingertip sensor 111, the IMU 112, and the IMU 113, and supplying the sensor data to the control unit 154.

The imaging unit 161 starts processing of capturing an image in front of the face of the user and supplying the obtained front image to the control unit 154. Furthermore, the imaging unit 161 starts processing of capturing an image of the area including the eyes of the user and supplying the obtained user image to the control unit 154.

The IMU 162 starts processing of detecting the acceleration and angular velocity of the head of the user and supplying the control unit 154 with sensor data indicating a detection result.

In Step S2, the gesture detection unit 171 determines whether or not the position and posture of the hand base portion have changed within a predetermined area.

Specifically, the gesture detection unit 171 detects changes in the position and posture of the hand base portion on the basis of the acceleration and angular velocity of the hand base portion. For example, in a case where a change in the position of the hand base portion is less than a predetermined threshold value (hereinafter, referred to as a position threshold value) and a change in the posture of the hand base portion on each axis (x-axis, y-axis, z-axis) is less than a predetermined threshold value (hereinafter, referred to as a posture threshold value), the gesture detection unit 171 determines that the position and posture of the hand base portion have changed within the predetermined area. Meanwhile, in a case where the change in the position of the hand base portion is equal to or greater than the position threshold value or the change in the posture of the hand base portion is equal to or greater than the posture threshold value on at least one axis, the gesture detection unit 171 determines that at least either the position or posture of the hand base portion has changed beyond the predetermined area.

Note that, for example, the position threshold value is set to 10 mm/sec. For example, the posture threshold value is set to 1 degree/sec for each axis.

The determination processing in Step S2 is repeatedly executed until it is determined that the position and posture of the hand base portion have changed within the predetermined area. Meanwhile, in a case where it is determined that the position and posture of the hand base portion have changed within the predetermined area, the processing proceeds to Step S3.

In Step S3, the gesture detection unit 171 determines whether or not the index finger has come into contact with the thumb. For example, in a case where the capacitance on the fingertip of the index finger is less than a predetermined threshold value or the pressure on the fingertip of the index finger is less than a predetermined threshold value, the gesture detection unit 171 determines that the fingertip of the index finger is not in contact with the thumb, and the processing returns to Step S2.

Thereafter, the processing in Steps S2 and S3 is repeatedly executed until it is determined in Step S3 that the index finger has been brought into contact with the thumb.

Meanwhile, in Step S3, in a case where the capacitance on the fingertip of the index finger is equal to or greater than the predetermined threshold value and the pressure on the fingertip of the index finger is equal to or greater than the predetermined threshold value, the gesture detection unit 171 determines that the index finger is brought into contact with the thumb, and the processing proceeds to Step S4.

Note that, for example, in Step S3, it is also possible to detect the contact between the thumb and the index finger on the basis of only the pressure on the fingertip of the index finger.

However, the detection accuracy is improved when the capacitance on the fingertip of the index finger is also used. For example, the detection accuracy is improved for a case where the index finger is slowly moved to be brought into contact with the thumb.

Meanwhile, a method for detecting a contact between the thumb and the index finger only on the basis of the capacitance on the fingertip of the index finger is not very desirable because there is a possibility that erroneous detection occurs in a case where, for example, the thumb and the index finger accidentally come into contact with each other.

In Step S4, the gesture detection unit 171 determines whether or not a position of the fingertip of the index finger is within an area of the virtual object. For example, the gesture detection unit 171 detects the position of the fingertip of the index finger in a predetermined coordinate system (a world coordinate system, for example) on the basis of the front image. Then, the gesture detection unit 171 compares, with the position of the fingertip of the index finger, a region in which the virtual object is assumed to be present in the coordinate system described above in a case where the virtual object would exist in the real world (hereinafter, referred to as a virtual object region).

Then, in a case where the fingertip of the index finger is included in the virtual object region, the gesture detection unit 171 determines that the position of the fingertip of the index finger is within the area of the virtual object. Meanwhile, in a case where the fingertip of the index finger is not included in the virtual object region, the gesture detection unit 171 determines that the position of the fingertip of the index finger is not within the area of the virtual object.

Note that the virtual object region does not necessarily need to exactly match a region in which the virtual object is assumed to be present in the real world. For example, a region obtained by providing a margin around the region in which the virtual object is assumed to be present in the real world may be set as the virtual object region. Furthermore, for example, a region near the center of the region in which the virtual object is assumed to be present in the real world may be set as the virtual object region.

Then, in a case where it is determined that the position of the fingertip of the index finger is not within the area of the virtual object, the processing returns to Step S2.

Thereafter, the processing in Steps S2 to S4 is repeatedly executed until it is determined in Step S4 that the position of the fingertip of the index finger is within the area of the virtual object.

Meanwhile, in a case where it is determined in Step S4 that the position of the fingertip of the index finger is within the area of the virtual object, the processing proceeds to Step S5.

In Step S5, the gesture detection unit 171 determines that the virtual object has been pinched. In other words, the gesture detection unit 171 determines that the pinching gesture has been started.

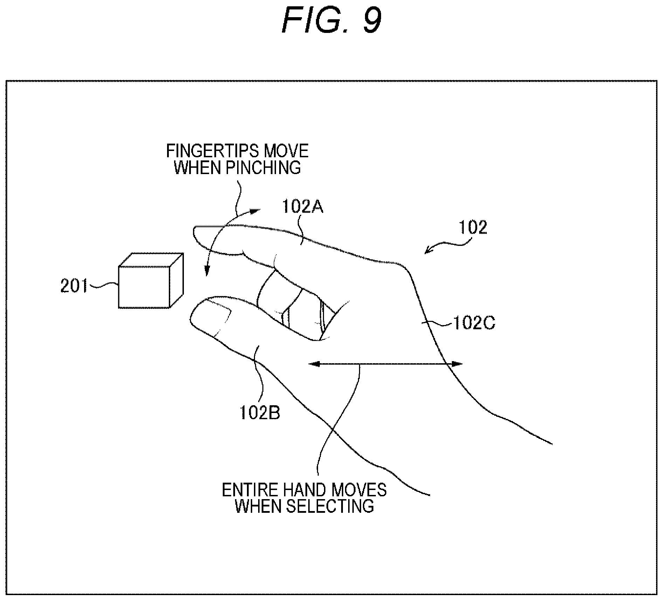

For example, as illustrated in Fig. 9, in a case where the user pinches a virtual object 201 with the hand 102, first, it is conceivable that the entire hand 102 moves to a vicinity of the virtual object 201 to be pinched, in order to select the virtual object 201. Then, it is conceivable that, at a time when the user pinches the hand 102, only the fingers (in particular, the index finger 102A) move in a state where the hand base portion including the back of hand 102C is substantially stationary.

Therefore, in a case where the position and posture of the hand base portion have changed within the predetermined area, and the fingertip of the index finger is within the area of the virtual object when brought into contact with the thumb (that is, in a case where the thumb and the index finger come into contact with each other within an area including the virtual object), it is determined that the virtual object is pinched.

In Step S6, similarly to the processing in Step S2, it is determined whether or not the position and posture of the hand base portion have changed within the predetermined area. In a case where it is determined that the position and posture of the hand base portion have changed within the predetermined area, the processing proceeds to Step S7.

Note that the position threshold value and posture threshold value used in the processing in Step S6 may be set to the same values as the position threshold value and posture threshold value used in the processing in Step S2, or may be set to different values.

In Step S7, the gesture detection unit 171 determines whether or not the index finger is separated from the thumb. For example, in a case where the capacitance on the fingertip of the index finger is equal to or greater than the predetermined threshold value, the gesture detection unit 171 determines that the index finger is not separated from the thumb, and the processing returns to Step S6.

Note that, in the determination processing in Step S7, only the capacitance on the fingertip of the index finger is used instead of using the pressure on the fingertip of the index finger.

Meanwhile, in a case where it is determined in Step S6 that at least either the position or posture of the hand base portion has changed beyond the predetermined area, the processing proceeds to Step S8.

In Step S8, the gesture detection unit 171 determines whether or not at least either the position or posture of the index finger has changed beyond the predetermined area, and whether or not a state where the index finger is separated from the thumb has been maintained.

For example, the gesture detection unit 171 detects changes in the position and posture of the index finger on the basis of the acceleration and angular velocity of the index finger. For example, in a case where the change in the position of the index finger is less than the predetermined threshold value and the change in the posture of the index finger on at least each axis is less than the predetermined threshold value, the gesture detection unit 171 determines that the position and posture of the index finger have changed within the predetermined area. Meanwhile, in a case where the change in the position of the index finger is equal to or greater than the predetermined threshold value or the change in the posture of the index finger is equal to or greater than the predetermined threshold value on at least one axis, the gesture detection unit 171 determines that at least either the position or posture of the index finger has changed beyond the predetermined area.

For example, in a case where the state in which the capacitance on the fingertip of the index finger is less than the predetermined threshold value has been maintained for a predetermined period (for example, 0.2 seconds) or longer, the gesture detection unit 171 determines that the state in which the index finger is separated from the thumb has been maintained. Meanwhile, in a case where the state in which the capacitance on the fingertip of the index finger is less than the predetermined threshold value has not been maintained for a predetermined period (for example, 0.2 seconds) or longer, the gesture detection unit 171 determines that the state in which the index finger is separated from the thumb has not been maintained.

Then, in a case where it is determined that the position and posture of the index finger have changed within the predetermined area, or that the state in which the index finger is separated from the thumb has not been maintained, the processing returns to Step S6.

Thereafter, the processing in Steps S6 to S8 is repeatedly executed until it is determined in Step S7 that the index finger is separated from the thumb or it is determined in Step S8 that at least either the position or posture of the index finger has changed beyond the predetermined area, and that the state in which the index finger is separated from the thumb has been maintained.

Meanwhile, in Step S7, for example, in a case where the capacitance on the fingertip of the index finger is less than the predetermined threshold value, the gesture detection unit 171 determines that the index finger has been separated from the thumb, and the processing proceeds to Step S9.

Furthermore, in a case where it is determined in Step S8 that at least either the position or posture of the index finger has changed beyond the predetermined area, and that the state where the index finger is separated from the thumb has been maintained, the processing proceeds to Step S9.

In Step S9, the gesture detection unit 171 determines that the virtual object has been released.

For example, there are conceivable case where the user releases the virtual object, case where the user gently releases the virtual object, and case where the user swiftly releases the virtual object.

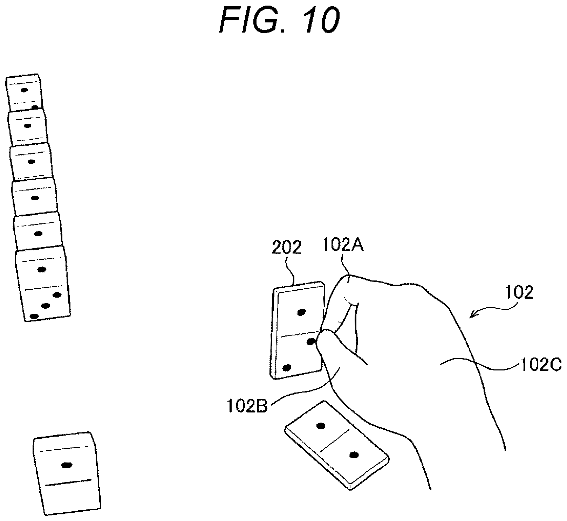

For example, Fig. 10 illustrates an example of a case where the user gently releases a virtual object. In this example, an example is illustrated in which the user arranges dominoes for domino toppling in a virtual space, and releases the virtual object, a domino 202, from the hand 102. In this case, it is conceivable that the user moves only the index finger 102A and the thumb 102B while keeping the hand base portion including the back of hand 102C substantially stationary.

In this regard, the gesture of gently releasing the virtual object is detected by the determination processing in Steps S7 and S8 detecting that the position and posture of the hand base portion have changed within the predetermined area, and that the index finger has separated from the thumb.

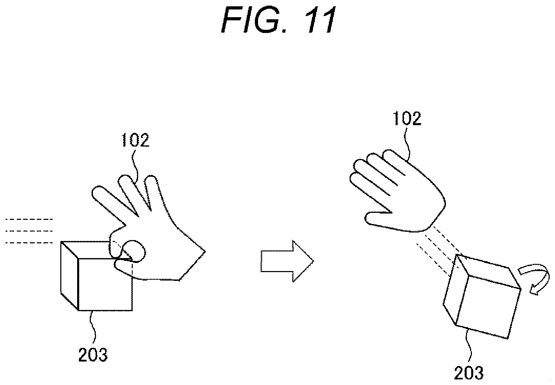

For example, Fig. 11 illustrates an example of a case where the user swiftly releases a virtual object. In this case, it is conceivable that the user releases a virtual object 203 from the hand 102 at a desired position while moving the hand 102 pinching the virtual object 203.

In this regard, the gesture of swiftly releasing the virtual object is detected by the determination processing in Steps S7 and S9 detecting that at least either the position or posture of the hand base portion has changed beyond the predetermined area, that at least either the position or posture of the index finger has changed beyond the predetermined area, and that the state where the index finger is separated from the thumb has been maintained.

Note that, for example, in a case where the user pinches and moves the virtual object with a hand, it is conceivable that the thumb and the index finger are unintentionally separated from each other. In particular, in a case where the virtual object is swiftly moved or swung, it is conceivable that the thumb and the index finger are unintentionally separated from each other.

In this regard, as described above, unless the state in which the index finger is separated from the thumb has been maintained for a predetermined period or longer, it is not determined that the virtual object is released. Therefore, in a case where the thumb and the index finger are separated from each other unintentionally by the user, it is prevented that the virtual object is erroneously detected to be released.

Thereafter, the processing returns to Step S1, and the processing in and after Step S1 is executed.

As described above, it is possible to quickly and accurately detect the gesture in which the user pinches or releases the virtual object.

For example, by individually sensing movement of the hand base portion of the hand of the user and movement of the fingers of the hand of the user, it is possible to more naturally detect a pinching motion of the user. Therefore, for example, it is possible to accurately distinguish between the gesture in which the user selects the virtual object and the gesture in which the user pinches the virtual object. Furthermore, for example, it is possible to accurately distinguish between the gesture in which the user continues to pinch the virtual object and the gesture in which the user releases the virtual object.

### <<3. Modifications>>

Next, modifications of the above-described embodiment will be described.

### <Response to erroneous detection>

For example, the information processing system 101 may respond to a case where a result of detecting a pinching object is contrary to an intention of the user.

For example, in a case where the virtual object is pinched although not intended by the user or a virtual object different from the virtual object intended by the user is pinched, a last detected gesture of pinching the virtual object may be canceled by the user performing a predetermined gesture.

For example, there may be a case where, even if the user thinks that the user has pinched the virtual object, the virtual object is not determined to be pinched, because the position or posture of the hand base portion has changed beyond the predetermined area. In this case, it is conceivable that the user tries to pinch the same virtual object again.

In this regard, for example, in a case where the gesture detection unit 171 detects a gesture of continually bringing the thumb and the index finger into contact with each other with respect to the same virtual object, the above-described position threshold value and posture threshold value may be reduced. Therefore, in a case where the user tries to pinch the same virtual object again, the gesture of pinching the virtual object is easily detected.

### <Modifications regarding gesture>

For example, in a case where the virtual object is large, it is conceivable that the user tries to pinch the virtual object by bringing the fingertip of the thumb and the fingertip of the index finger close to each other, instead of bringing them into contact with each other. In this regard, for example, the gesture detection unit 171 may detect the gesture of pinching the virtual object even if the fingertip of the thumb and the fingertip of the index finger do not come into contact with each other.

In this case, for example, the gesture detection unit 171 may detect the gesture of pinching the virtual object by detecting proximity of the fingertip of the thumb and the fingertip of the index finger on the basis of the front image.

For example, the gesture detection unit 171 may detect the positions and postures of the thumb and index finger on the basis of acceleration and angular velocity of the thumb and the index finger, and detect the proximity of the fingertip of the thumb and the fingertip of the index finger, thereby detecting the gesture of pinching the virtual object.

For example, the gesture detection unit 171 may detect the gesture of pinching the virtual object by detecting the proximity of the fingertip of the thumb and the fingertip of the index finger on the basis of sensor data from a proximity sensor provided on the fingertip (ball) of the index finger.

Note that the gesture of pinching the virtual object may be detected by combining two or more of the above-described methods and detecting the proximity of the fingertip of the thumb and the fingertip of the index finger.

The present technology can also be applied to other gestures such as, for example, a gesture of grasping the virtual object, a gesture of bending a finger into a hook shape to hook the virtual object, and a gesture of flicking the virtual object with a finger, in addition to the pinching gesture.

### <Modifications regarding pinching gesture detection method>

For example, the gesture detection unit 171 may detect the position and posture of the hand base portion by using acceleration and angular velocity of a portion other than a back of the hand (for example, a wrist, palm, fist, arm, or the like).

For example, depending on a size and shape of the virtual object, it is conceivable that the user places one hand under the virtual object and pinches the virtual object with another hand. In this regard, for example, the gesture detection unit 171 may detect the gesture of pinching the virtual object by further using movement of the hand or arm opposite to the hand pinching the virtual object.

For example, in a case where the user pinches a virtual object of a certain size or larger, it is conceivable that the user once spreads fingers of own before pinching the virtual object. In this regard, for example, the gesture detection unit 171 may make it a condition of detection of the gesture of pinching the virtual object that a distance between the thumb and the index finger is widened, or that the fingers of the hand are spread once.

For example, the gesture detection unit 171 may detect the virtual object to be pinched on the basis of the line of sight of the user detected by the line-of-sight detection unit 172.

### <Modifications regarding threshold values>

For example, the gesture detection unit 171 may change the position threshold value and posture threshold value for the hand base portion that are used in Steps S2 and S6 in Fig. 8 described above, on the basis of a state and attribute of the user, a state and attribute of the virtual object, the surrounding environment, or the like.

For example, because it is conceivable that the user moves own hand faster at a position close to a dominant arm of the user, in a case where the virtual object is at a position close to the dominant arm of the user, the gesture detection unit 171 may acquire information of the dominant arm of the user and increase at least either the position threshold value or the posture threshold value.

For example, because it is conceivable that the user moves own hand slightly in a case where the information processing system 101 is used in a narrow space, the gesture detection unit 171 may reduce at least either the position threshold value or the posture threshold value.

For example, the gesture detection unit 171 may change at least either the position threshold value or the posture threshold value, on the basis of a distance between the virtual object and a hand, a distance between a plurality of virtual objects, the size of the virtual object, a speed of moving the virtual object, or the like.

For example, the gesture detection unit 171 may change at least either the position threshold value or the posture threshold value, on the basis of a posture of the user (for example, whether the user is standing or sitting, or the like), a walking state of the user, history of use of the information processing system 101 by the user, a region where the user is good at operation, what the user is wearing, or the like. It is conceivable that what the user is wearing is, for example, one that makes it difficult to move a hand, such as a glove.

For example, various threshold values including the position threshold value and the posture threshold value may be set and changed by using machine learning. In this case, for example, the threshold values may be set before the information processing system 101 reaches a hand of the user, or the threshold values may be changed after the information processing system 101 reaches the hand of the user.

### <Modifications regarding user interface>

For example, in a case where the gesture detection unit 171 determines that the user has pinched the virtual object in Step S5 in Fig. 8 described above, the output unit 155 may notify the user that the pinching gesture has been detected. For example, the display unit 181 may change a display mode (for example, color, shape, transparency, brightness, or the like) of the pinched virtual object under control of the output control unit 174.

Note that, in addition to changing the display mode of the virtual object, the user may be notified that the pinching gesture has been detected by audio information or tactile information.

Therefore, the user can recognize that the pinching gesture has been detected and recognize the virtual object targeted for the pinching gesture, and can operate the information processing system 101 at ease.

For example, with learning using past sensor data or the like, the gesture detection unit 171 may predict the virtual object to be pinched by the user, on the basis of movement of the hand base portion, the index finger, and the like of the user. Then, the gesture detection unit 171 may set in advance the virtual object as the detection target for the pinching gesture. Furthermore, the display unit 181 may change the display mode of the virtual object under control of the output control unit 174. Therefore, the user can pinch a desired virtual object more quickly.

Note that, for example, whether or not the display mode of the virtual object described above is to be changed may be changed on the basis of the user or the surrounding environment. For example, the display mode of the virtual object may be changed as described above for a user who has not yet used the information processing system 101 for a long time, and the display mode of the virtual object may not be changed for a user who has used the information processing system 101 for a long time. For example, in a case where a large amount of information is displayed in the field of view of the user, the display mode of the virtual object may not change to avoid presentation of an excessive amount of information to the user.

For example, under control of the output control unit 174, the display unit 181 may display, in the field of view of the user, information indicating movement after the virtual object is released. For example, information of a locus, rotation state, landing position, posture, or the like of the virtual object in a case where the virtual object is released in a current state may be displayed in the field of view of the user.

For example, with tactile information, the haptics device 183 may transmit to the user a feeling of pinching or releasing the virtual object. In this case, the virtual object may not necessarily be displayed. For example, in a case where AR not using a display apparatus but using a tactile sense is used, or where a virtual object that is present outside the field of view of the user is pinched, it is possible for the user to feel a sense of pinching or releasing the virtual object with tactile information.

### <Other modifications>

For example, the user may pinch a plurality of virtual objects at a time. In this case, for example, the gesture detection unit 171 may change the number of virtual objects to be subjected to the pinching gesture, on the basis of an amount of change in the position and posture of the hand base portion.

The present technology can also be applied when a robot arm pinches a real object or a virtual object in a case where, for example, the robot arm moves at a remote location in conjunction with movement of a hand of the user. In this case, the gesture detection unit 171 may change various threshold values such as the position threshold value and the posture threshold value according to performance of the robot arm.

For example, the present technology can also be applied to a method other than the HMD, which is, for example, AR or MR implemented by using a display terminal such as a projector or a smartphone.

### <<4. Others>>

### <Configuration example of computer>

The above-described series of processing can be executed by hardware and can also be executed by software. In a case where a series of processing is executed by software, a program included in the software is installed on a computer. Here, examples of the computer include a computer incorporated in dedicated hardware, and for example, a general-purpose personal computer that can execute various functions by installing various programs.

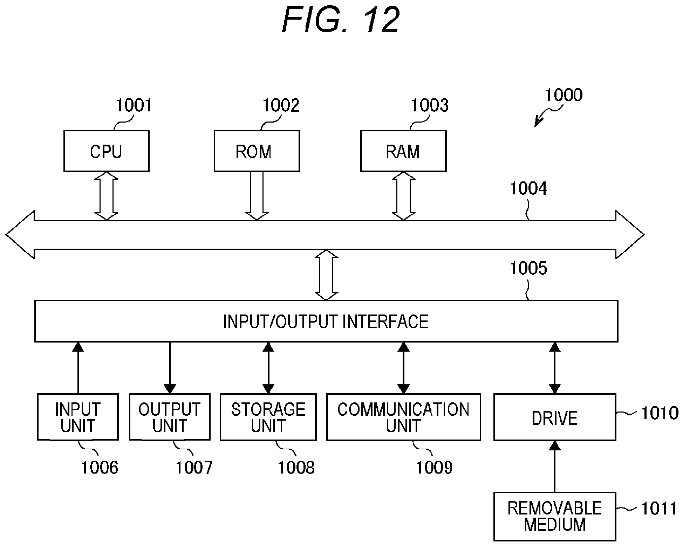

Fig. 12 is a block diagram illustrating a configuration example of hardware of a computer that executes the above-described series of processing by a program.

In a computer 1000, a central processing unit (CPU) 1001, a read only memory (ROM) 1002, and a random access memory (RAM) 1003 are mutually connected by a bus 1004.

An input/output interface 1005 is further connected to the bus 1004. To the input/output interface 1005, an input unit 1006, an output unit 1007, a storage unit 1008, a communication unit 1009, and a drive 1010 are connected.

The input unit 1006 includes an input switch, a button, a microphone, an imaging element, and the like. The output unit 1007 includes a display, a speaker, and the like. The storage unit 1008 includes a hard disk, a non-volatile memory, and the like. The communication unit 1009 includes a network interface and the like. The drive 1010 drives a removable medium 1011 such as a magnetic disk, an optical disk, a magneto-optical disk, or a semiconductor memory.

In the computer 1000 configured as described above, the series of processing described above is executed, for example, by the CPU 1001 loading a program stored in the storage unit 1008 into the RAM 1003 via the input/output interface 1005 and the bus 1004, and executing.

The program executed by the computer 1000 (CPU 1001) can be provided, for example, by being recorded in the removable medium 1011 as a package medium and the like. Furthermore, the program can be provided via a wired or wireless transmission medium, such as a local area network, the Internet, or digital satellite broadcasting.

In the computer 1000, the program can be installed in the storage unit 1008 via the input/output interface 1005 by mounting the removable medium 1011 on the drive 1010. Furthermore, the program can be received by the communication unit 1009 via a wired or wireless transmission medium and installed in the storage unit 1008. Furthermore, the program can be installed in the ROM 1002 or the storage unit 1008 in advance.

Note that the program executed by the computer may be a program in which processing is performed in time series in the order described in the present specification or may be a program in which processing is performed in parallel or at necessary timing such as when a call is made.

Furthermore, in the present specification, the system means a set of a plurality of components (an apparatus, a module (a part), and the like), and it does not matter whether or not all the components are in the same housing. Therefore, a plurality of apparatuses housed in separate housings and connected to each other via a network and one apparatus in which a plurality of modules is housed in one housing are both systems.

Moreover, the embodiments of the present technology are not limited to the above-described embodiments, and a variety of modifications can be made without departing from the gist of the present technology.

For example, the present technology can have a cloud computing configuration in which one function is shared and processed in cooperation by a plurality of apparatuses via a network.

Furthermore, each of the steps described in the above-described flowcharts can be executed by one apparatus or executed by a plurality of apparatuses in a shared manner.

Moreover, in a case where a plurality of pieces of processing is included in one step, the plurality of pieces of processing included in the one step can be executed by one device or executed by a plurality of apparatuses in a shared manner.

### <Configuration combination examples>

The present technology can have the following configurations.

(1) An information processing apparatus including
   a gesture detection unit that individually detects movement of a hand base portion that is a portion not including fingers of a hand of a user, and movement of a first finger of the hand, and detects a gesture in which the user pinches a virtual object, on the basis of the movement of the hand base portion and the movement of the first finger.
(2) The information processing apparatus according to (1), in which,
   in a case where a position and posture of the hand base portion have changed within a first area, the gesture detection unit determines that the virtual object has been pinched, when a fingertip of the first finger comes into contact with a fingertip of a second finger of the hand within a second area including the virtual object.
(3) The information processing apparatus according to (2), in which,
   in a case where the change in the position of the hand base portion is less than a first threshold value and the change in the posture of the hand base portion is less than a second threshold value, the gesture detection unit determines that the position and posture of the hand base portion have changed within the first area.
(4) The information processing apparatus according to (3), in which
   the gesture detection unit changes at least either the first threshold value or the second threshold value on the basis of at least either a state or attribute of the user.
(5) The information processing apparatus according to (3) or (4), in which
   the gesture detection unit changes at least either the first threshold value or the second threshold value on the basis of a surrounding environment.
(6) The information processing apparatus according to (3) or (4), in which
   the gesture detection unit changes at least either the first threshold value or the second threshold value on the basis of at least either a state or attribute of the virtual object.
(7) The information processing apparatus according to (2) or (3), in which
   the gesture detection unit detects changes in the position and posture of the hand base portion on the basis of acceleration and angular velocity of a back of the hand, and detects a state of contact between the fingertip of the first finger and the fingertip of the second finger on the basis of pressure on the fingertip of the first finger.
(8) The information processing apparatus according to (7), in which
   the gesture detection unit detects the state of contact between the fingertip of the first finger and the fingertip of the second finger further on the basis of capacitance on the fingertip of the first finger.
(9) The information processing apparatus according to (2) or (3), in which
   the first finger is an index finger, and
   the second finger is a thumb.
(10) The information processing apparatus according to any one of (1) to (3), in which,
   on the basis of the movement of the hand base portion and the movement of the first finger, the gesture detection unit further detects a gesture of releasing the virtual object.
(11) The information processing apparatus according to (10), in which
   the gesture detection unit determines that the virtual object has been released, when a fingertip of the first finger is separated from a fingertip of the second finger in a case where a position and posture of the hand base portion have changed within a third area, or when at least either the position or posture of the first finger has changed beyond a fourth area and a state where the fingertip of the first finger is separated from the fingertip of the second finger has been maintained for a predetermined period or longer in a case where at least either the position or posture of the hand base portion has changed beyond the third area.
(12) The information processing apparatus according to (11), in which
   the gesture detection unit detects changes in the position and posture of the hand base portion on the basis of acceleration and angular velocity of a back of the hand, detects changes in the position and posture of the first finger on the basis of acceleration and angular velocity of the first finger, and detects a state of contact between the fingertip of the first finger and the fingertip of the second finger on the basis of capacitance on the fingertip of the first finger.
(13) The information processing apparatus according to any one of (1) to (3), further including
   an output control unit that executes, in a field of view of the user, control of superimposing and displaying the virtual object on a real world.
(14) The information processing apparatus according to (13), in which
   the output control unit changes a display mode of the virtual object in a case where the virtual object is determined to have been pinched.
(15) The information processing apparatus according to (13) or (14), in which
   the gesture detection unit predicts, on the basis of the movement of the hand base portion and the movement of the first finger, the virtual object to be pinched by the user, and
   the output control unit changes a display mode of the virtual object that has been predicted to be pinched by the user.
(16) The information processing apparatus according to (13) or (14), in which
   the output control unit displays information indicating movement after the virtual object is released.
(17) An information processing method including
   individually detecting movement of a hand base portion that is a portion not including fingers of a hand of a user, and predetermined movement of a finger of the hand, and, on the basis of the movement of the hand base portion and the movement of the finger, detecting a gesture in which the user pinches a virtual object.

Note that, the effects described in the present specification are merely examples and are not limited, and there may be other effects.

### REFERENCE SIGNS LIST

101 Information processing system
111 Fingertip sensor
112, 113 IMU
114 Head-mounted display
152 Sensing unit
154 Control unit
155 Output unit
161 Imaging unit
162 IMU
171 Gesture detection unit
172 Line-of-sight detection unit
173 Information processing unit
174 Output control unit
181 Display unit
182 Audio output unit
183 Haptics device

## Claims

1. An information processing apparatus comprising
a gesture detection unit that individually detects movement of a hand base portion that is a portion not including fingers of a hand of a user and movement of a first finger of the hand, and detects, on a basis of the movement of the hand base portion and the movement of the first finger, a gesture in which the user pinches a virtual object.

2. The information processing apparatus according to claim 1, wherein,
in a case where a position and posture of the hand base portion have changed within a first area, the gesture detection unit determines that the virtual object has been pinched, when a fingertip of the first finger comes into contact with a fingertip of a second finger of the hand within a second area including the virtual object.

3. The information processing apparatus according to claim 2, wherein,
in a case where the change in the position of the hand base portion is less than a first threshold value and the change in the posture of the hand base portion is less than a second threshold value, the gesture detection unit determines that the position and posture of the hand base portion have changed within the first area.

4. The information processing apparatus according to claim 3, wherein
the gesture detection unit changes at least either the first threshold value or the second threshold value on a basis of at least either a state or attribute of the user.

5. The information processing apparatus according to claim 3, wherein
the gesture detection unit changes at least either the first threshold value or the second threshold value on a basis of a surrounding environment.

6. The information processing apparatus according to claim 3, wherein
the gesture detection unit changes at least either the first threshold value or the second threshold value on a basis of at least either a state or attribute of the virtual object.

7. The information processing apparatus according to claim 2, wherein
the gesture detection unit detects changes in the position and posture of the hand base portion on a basis of acceleration and angular velocity of a back of the hand, and detects a state of contact between the fingertip of the first finger and the fingertip of the second finger on a basis of pressure on the fingertip of the first finger.

8. The information processing apparatus according to claim 7, wherein
the gesture detection unit detects the state of contact between the fingertip of the first finger and the fingertip of the second finger further on a basis of capacitance on the fingertip of the first finger.

9. The information processing apparatus according to claim 2, wherein
the first finger is an index finger, and
the second finger is a thumb.

10. The information processing apparatus according to claim 1, wherein,
on a basis of the movement of the hand base portion and the movement of the first finger, the gesture detection unit further detects a gesture of releasing the virtual object.

11. The information processing apparatus according to claim 10, wherein
the gesture detection unit determines that the virtual object has been released, when a fingertip of the first finger is separated from a fingertip of the second finger in a case where a position and posture of the hand base portion have changed within a third area, or when at least either the position or posture of the first finger has changed beyond a fourth area and a state where the fingertip of the first finger is separated from the fingertip of the second finger has been maintained for a predetermined period or longer in a case where at least either the position or posture of the hand base portion has changed beyond the third area.

12. The information processing apparatus according to claim 11, wherein
the gesture detection unit detects changes in the position and posture of the hand base portion on a basis of acceleration and angular velocity of a back of the hand, detects changes in the position and posture of the first finger on a basis of acceleration and angular velocity of the first finger, and detects a state of contact between the fingertip of the first finger and the fingertip of the second finger on a basis of capacitance on the fingertip of the first finger.

13. The information processing apparatus according to claim 1, further comprising
an output control unit that executes, in a field of view of the user, control of superimposing and displaying the virtual object on a real world.

14. The information processing apparatus according to claim 13, wherein
the output control unit changes a display mode of the virtual object in a case where the virtual object is determined to have been pinched.

15. The information processing apparatus according to claim 13, wherein
the gesture detection unit predicts, on a basis of the movement of the hand base portion and the movement of the first finger, the virtual object to be pinched by the user, and
the output control unit changes a display mode of the virtual object that has been predicted to be pinched by the user.

16. The information processing apparatus according to claim 13, wherein
the output control unit displays information indicating movement after the virtual object is released.

17. An information processing method comprising
individually detecting movement of a hand base portion that is a portion not including fingers of a hand of a user, and predetermined movement of a finger of the hand, and, on a basis of the movement of the hand base portion and the movement of the finger, detecting a gesture in which the user pinches a virtual object.
